Europäisches Patentamt

European Patent Office

Office européen des brevets

(11) Veröffentlichungsnummer: **0 280 109 B1**

(19)

(12) EUROPÄISCHE PATENTSCHRIFT

(45) Veröffentlichungstag der Patentschrift: **29.04.92**

(21) Anmeldenummer: **88101860.0**

(22) Anmeldetag: **09.02.88**

(51) Int. Cl.5: **G01N 13/04**

(54) Verfahren zur Bestimmung des Gehaltes von mindestens zwei in einem Lösungsmittel gelösten Stoffen mittels osmotischer Zellen.

(30) Priorität: **27.02.87 DE 3706361**

(43) Veröffentlichungstag der Anmeldung:
**31.08.88 Patentblatt 88/35**

(45) Bekanntmachung des Hinweises auf die
Patenterteilung:
**29.04.92 Patentblatt 92/18**

(84) Benannte Vertragsstaaten:
**CH DE FR GB LI SE**

(56) Entgegenhaltungen:
**EP-A- 0 183 072**
**DE-A- 2 163 640**
**US-A- 4 455 864**

(73) Patentinhaber: **Forschungszentrum Jülich GmbH**
**Postfach 1913**
**W-5170 Jülich(DE)**

(72) Erfinder: **Steudle, Ernst, Dr.**
**Dorotheenstrasse 3**
**W-8581 Eckersdorf(DE)**
Erfinder: **Böling, Gerd**
**Bonsdorfer Strasse 2**
**W-5176 Inden-Pier(DE)**
Erfinder: **Zillikens, Josef**
**Artilleriestrasse 44**
**W-5170 Jülich(DE)**

Rank Xerox (UK) Business Services
(3.08/2.18/2.0)

**Beschreibung**

Die Erfindung bezieht sich auf ein osmometrisches Verfahren zur Bestimmung des Gehaltes von mindestens zwei in einem Lösungsmittel gelösten Stoffen gemäß dem Oberbegriff des Anspruchs 1, sowie auf Einrichtungen zur Durchführung des Verfahrens.

Das vorgenannte Verfahren und die Einrichtung sind aus der DE-OS 35 25 668 bekannt. Sie dienen der Bestimmung des Gehaltes an Stoffen in einer Lösung, wenn sich zwei oder mehr Stoffe (ein in Bezug auf die Membran permeabler und ein oder mehrere impermeable Stoffe) in der Lösung befinden.

Aus der DE-OS 35 25 668 ist die Verfahrensweise (Verfahren Ia) bekannt, nach hinreichend schnellem Austausch der zu untersuchenden Lösung gegen das reine Lösungsmittel aus dem Druckverlauf in der osmotischen Zelle den sich einstellenden Minimaldruck $P_{min}$ sowie nach darauffolgendem Druckanstieg den sich einstellenden Enddruck $P_E$ zu messen, worauf nach der Maßgabe von Eichwerten aus der Druckdifferenz $P_O - P_E$ der Gehalt des oder der impermeablen Stoffe in der zu untersuchenden Lösung und aus der Differenz $P_E - P_{min}$ der Gehalt des permeablen Stoffes in der Lösung ermittelt wird. Dabei kann auch so verfahren werden, daß der Gehalt an impermeablen

$$(C^{\circ}_{imp})$$

Substanzen und permeabler ($C^{\circ}_s$ ) Substanz in der zu untersuchenden Lösung durch Eichung des MeßSystems mit verschiedenen, die impermeablen und permeablen Stoffe in unterschiedlichen, bekannten Konzentrationen enthaltenden Lösungen ermittelt wird, wobei bei der Bestimmung der permeablen Komponente darauf zu achten ist, daß die Eichlösungen den impermeablen Stoff in etwa der gleichen Konzentration enthalten wie die zu untersuchende Lösung, worauf sich deren Konzentration an permeablem Stoff aus dem Graphen $(P_E - P_{min}) = f (C^{\circ}_s)$ und die Konzentration an impermeablen Stoffen aus den Graphen

$$(P_O - P_E) = g (C^{\circ}_{imp})$$

ergeben.

$$(P_O - P_E) = g (C^{\circ}_{imp})$$

stellt in jedem Fall eine Gerade dar, während $(P_E - P_{min}) = f (C^{\circ}_s)$ von der Geradenform abweichen kann, da $t_{min}$ vom Mischungsverhältnis

$$s \cdot C^{\circ}_s / C^{\circ}_{imp}$$

abhängt.

Aus der DE-0S 35 25 668 ist ferner die Verfahrensweise (Verfahren Ib) bekannt, nach dem Austausch von zu untersuchender Lösung gegen das Lösungsmittel den sich in der osmotischen Zelle einstellenden Minimaldruck $P_{min}$, die Zeit $t_{min}$, innerhalb der sich der Minimaldruck $P_{min}$ einstellt, die Geschwindigkeitskonstante $k_s$ für den nach dem Minimaldruck erfolgenden exponentiellen Druckanstieg und den nach dem Druckanstieg sich einstellenden Enddruck $P_E$ zu ermitteln und danach den Gehalt $C^{\circ}_s$ des permeablen Stoffes s aus der Beziehung

$$P_E - P_{min} = \sigma_s \cdot RT \cdot C^{\circ}_s \cdot \exp(-k_s \cdot t_{min}) \qquad (1)$$

mit

R = 8,31434 J/°k mol,
T = absolute Temperatur und

EP 0 280 109 B1

$\sigma_s$ = Reflektionskoeffizient von s

und der Gehalt

$$(C^o_{imp})$$

des oder der impermeablen Stoffe aus der Beziehung

$$P_O - P_E = RT \cdot C^o_{imp} \qquad (2)$$

zu errechnen.

Bei der Durchführung der bekannten Verfahrensweisen wird eine nach Möglichkeit starre osmotische Zelle verwendet, d.h. eine osmotische Zelle mit starrer Wandung und starrer Membran, so daß während der Durchführung des Verfahrens die Änderung des Volumens der osmotischen Zelle vernachlässigbar klein ist. Bei Anwendung des Verfahrens Ib gelten dann die Beziehungen 1 und 2.

Für den Fall jedoch, daß die Membran und die osmotische Zelle nicht hinreichend starr ist und damit die bei der Durchführung der Bestimmung auftretenden Änderungen des Volumens der osmotischen Zelle nicht vernachlässigbar sind, wird der Volumenelastizitätsmodul $\epsilon$ mittels einer hierfür geeigneten Einrichtung ermittelt, wonach sich der Gehalt $C^o_s$ des permeablen Stoffes aus der Beziehung

$$P_E - P_{min} = \frac{\epsilon}{\epsilon + RT \cdot C^1_{imp}} \cdot \sigma_s \cdot RT \cdot C^o_s \cdot \exp(-k_s \cdot t_{min}) \qquad (3)$$

und sich der Gehalt

$$\overset{o}{C}imp$$

des impermeablen Stoffes aus der Beziehung

$$P_O - P_E = \frac{\epsilon}{\epsilon + RT \cdot C^1_{imp}} RT \cdot C^o_{imp} \qquad (4)$$

ergeben.

Die bei den Verfahrensweisen Ia und Ib zu verwendende Membran soll eine hohe Leitfähigkeit für das Lösungsmittel und ein hinreichend großes Rückhaltevermögen für die Stoffe aufweisen. Das Rückhaltevermögen der Membran ist für die Stoffe dann hinreichend groß, wenn der Austausch des permeablen Stoffes durch die Membran gegenüber dem Austausch des reinen Lösungsmittels über die Membran hinweg derart verzögert ist, daß während der Austauschphase des reinen Lösungsmittels der Austausch des permeablen Stoffes nur gering ist und wenn außerdem der Austausch des impermeablen Stoffes durch die Membran gegenüber dem Austausch des permeablen Stoffes derart verzögert ist, daß während des Austausches des permeablen Stoffes kein merkbarer Austausch des impermeablen Stoffes stattfindet, d.h. wenn die Geschwindigkeitskonstante $k_s$ für den permeablen Stoff genügend groß ist gegenüber der des impermeablen Stoffes, wenn also während der Untersuchung der impermeable Stoff praktisch nicht durch die Membran gelangt. Das bedeutet andererseits, daß bei vorgegebener Membran ein Stoff dann als permeabel anzusehen ist, wenn er während der Durchführung des Verfahrens gegenüber dem reinen Lösungsmittel hinreichend verzögert, gegenüber dem impermeablen Stoff jedoch hinreichend schnell durch die Membran gelangt. Entsprechend ist ein Stoff dann als impermeabel anzusehen, wenn er während der Durchführung

3

des Verfahrens praktisch nicht durch die Membran gelangt. Entsprechend kann in diesem Sinne auch ein Stoff praktisch impermeabel sein, obwohl der Reflektionskoeffizient $\sigma_s < 1$ ist, wenn seine Permeabilität (d.h. $k_s$) in der Membran hinreichend klein ist.

Beim bekannten Verfahren wird zur Einstellung des Arbeitsdruckes $P_O$ in der osmotischen Zelle als Osmometerlösung eine Lösung verwendet, in der sich ein impermeabler Stoff befindet, so daß sich infolge der osmotischen Druckdifferenz über der Membran in der osmotischen Zelle der hydrostatische Arbeitsdruck $P_O$ aufbaut.

Der Austausch der zu untersuchenden Lösung gegen das Lösungsmittel muß sehr schnell verlaufen gegenüber der Halbwertzeit für den Fluß des reinen Lösungsmittels durch die Membran, die im Bereich von Sekunden liegen kann.

Bei der Durchführung der bekannten alternativen Verfahrensweise Ib sind gegenüber der ersten Verfahrensweise Ia zusätzlich die Zeit $t_{min}$ von Beginn des Austauschvorganges der beiden Lösungen (Lösungsmittel und zu untersuchende Lösung) bis zur Einstellung des Minimaldruckes $P_{min}$ sowie die Geschwindigkeitskonstante $k_s$ für den nach dem Minimaldruck erfolgenden Druckanstieg zu ermitteln, der eine Folge der Permeation des permeablen Stoffes durch die Membran ist. Vor der Durchführung der Verfahrensweise Ib ist außerdem noch der Reflektionskoeffizient $\sigma_s$, der bei gegebener Membran und bei gegebenem Lösungsmittel eine Stoffkonstante ist, in bekannter Weise zu bestimmen.

Aus der DE-OS 35 25 668 ist außerdem ein als Verfahren II bezeichnetes Verfahren bekannt, das aus den Verfahrensvarianten IIa und IIb besteht. Bei diesem bekannten Verfahren wird nach Austausch des Lösungsmittels und der zu untersuchenden Lösung, die zwei Stoffe enthält, aus dem Druckabfall in der osmotischen Zelle die Anfangsneigung $(\frac{dP}{dt})_{t=0}$ der Druck/Zeit-Kurve gemessen und mit dieser Meßgröße nach Maßgabe von Eichwerten oder aus der Beziehung

$$\left(\frac{dP}{dt}\right)_{t=0} = -\frac{A_O}{V_O} \cdot Lp \cdot \epsilon \cdot RT (\sigma_1 \cdot C_1 + \sigma_2 \cdot C_2) \qquad (5)$$

der Ergebniswert

$$X_1 = \sigma_1 \cdot C_1 + \sigma_2 \cdot C_2 \qquad (6)$$

ermittelt.

Dabei sind
$A_O$ die effektive Oberfläche der Membran,
$V_O$ das Volumen der osmotischen Zelle,
$Lp$ die hydraulische Leitfähigkeit der Membran
$\epsilon$ der Volumenelastizitätsmodul der osmotischen Zelle,
$R = 8,31434$ J/°K mol,
$T$ absolute Temperatur,
$\sigma_1$ der Reflektionskoeffizient des Stoffes 1,
$C_1$ der Gehalt des Stoffes 1,
$\sigma_2$ der Reflektionskoeffizient des Stoffes 2 und
$C_2$ der Gehalt des Stoffes 2 ist.

Nach der Verfahrensvariante IIa wird parallel zur Ermittlung des Ergebniswertes $X_1$ nach dem beschriebenen Verfahren eine weitere Messung mittels einer zweiten osmotischen Zelle mit einer Membran mit anderem Rückhaltvermögen für die Stoffe durchgeführt, wobei ein weiterer Ergebniswert

$$X_2 = \sigma_1' \cdot C_1 + \sigma_2' \cdot C_2 \qquad (7)$$

ermittelt wird und anschließend mittels der beiden ermittelten Ergebniswerte $X_1$ und $X_2$ die Gehalte der beiden Stoffe errechnet werden. Nach der Verfahrensvariante IIb wird die weitere Messung mittels der zweiten osmotischen Zelle nach einem der Verfahren Ia oder Ib durchgeführt, wobei eine Membran mit einem solchen Rückhaltevermögen für die Stoffe verwendet wird, daß hinsichtlich der verwendeten Membran der eine Stoff permeabel und der andere Stoff impermeabel ist und wobei es hinreicht, daß nur der Gehalt des permeablen oder der Gehalt des impermeablen Stoffes ermittelt wird und unter Verwendung des Ergebniswertes $X_1$ die Gehalte beider Stoffe errechnet werden.

4

Für die Durchführung der Verfahrensvariante IIa, nach der der Ergebniswert $X_1$ und parallel hierzu der Ergebniswert $X_2$ bestimmt werden, ist zu gewährleisten, daß die Zeitkonstanten der osmotischen Zellen ausreichend klein sind. Ausreichend klein bedeutet beispielsweise, wenn ein Durchmischungsprozeß beobachtet werden soll, daß die Zeitkonstante des Durchmischungsprozesses groß ist gegenüber der des Mischungsprozesses in der osmotischen Zelle. Das ist dann der Fall, wenn die K-Werte der osmotischen Zellen:

$$K = \frac{A_o}{V_o} \cdot Lp \cdot \varepsilon \cdot RT \qquad (8)$$

hinreichend groß sind. Dies kann, da es sich bei den Faktoren

$$\frac{A_o}{V_o},$$

Lp und $\epsilon$ um konstruktionsspezifische Größen einer osmotischen Zelle bzw. deren Membran handelt, durch die Wahl geeigneter osmotischer Zellen geschehen. Andererseits soll der anfänglich lineare Verlauf der Druck/Zeit-Kurve, der sich infolge einer Konzentrationsänderung einstellt, verglichen mit der Dauer der Mischphase, die sich beim Austausch zweier Lösungen im Meßsystem einstellt, hinreichend lang sein.

Die Reflektionskoeffizienten $\sigma_1$ und $\sigma_2$ sind vorab zu bestimmen. Zur Bestimmung von $\sigma_1$ bzw. $\sigma_2$ vergleicht man die Anfangsneigung, die der Stoff 1 bzw. 2 bekannter Konzentration bewirkt mit derjenigen, die bei Zugabe eines impermeablen Stoffes (in bekannter Konzentration) erhalten wird.

Bei der Verfahrensvariante IIa sind die Membranen der beiden osmotischen Zellen so zu wählen, daß sich die Werte für $\sigma_1$ und $\sigma_1'$ bzw. $\sigma_2$ und $\sigma_2'$ hinreichend unterscheiden.

Die für eine vorgegebene osmotische Zelle konstante Größe K wird zweckmäßigerweise durch Eichung bestimmt.

Die beim Austausch von Lösungen in einem Behälter oder in einer Rohrleitung eintretende kurzzeitige Vermischung der Lösungen kann dazu führen, daß der anfängliche Druckabfall in der osmotischen Zelle ungenau definiert ist. Erst dann, wenn die Lösungen vollständig ausgetauscht sind, wird sich der lineare Verlauf der Druck/Zeit-Kurve einstellen, aus dem dann bei der Durchführung des Verfahrens II die Anfangsneigung bestimmt wird.

Die Verfahrensvariante IIa ermöglicht eine schnellere Bestimmung der Gehalte der beiden Stoffe als die Verfahren Ia und Ib, da bei letzteren der Verlauf der gesamten Druckkurve bis zum Erreichen des Endwertes $P_E$ abgewartet werden muß. Dafür werden allerdings bei der Durchführung des Verfahrens IIa (wie auch bei dem Verfahren IIb) zwei osmotische Zellen, bei der Durchführung der Verfahren Ia oder Ib dagegen nur je eine einzige osmotische Zelle benötigt.

Auch nach dem Verfahren IIb, bei dem die Parallelmessung über die Bestimmung der Druckdifferenz $(P_E - P_{min})$ bzw. $(P_o - P_E)$ erfolgt, ist eine schnellere Bestimmung des Gehaltes eines Stoffes für den Fall möglich, daß der Gehalt eines der Stoffe konstant ist und nur der Gehalt des anderen Stoffes gemessen werden soll.

Selbstverständlich kann, wenn es nicht in erster Linie auf die Bestimmung des Gehaltes der Stoffe, sondern auf die Bestimmung des Zeitpunktes einer Konzentrationsänderung in einer in einem Behälter oder einem Rohr befindlichen Lösung ankommt, nach dem Verfahren II ohne Parallelmessung vorgegangen werden, d.h., es wird mittels nur einer osmotischen Zelle der Druckabfall in der osmotischen Zelle festgestellt. Auf diese Weise kann eine osmotische Zelle als Kontroll- oder Warneinrichtung eingesetzt werden.

Anwendungsfälle für die Bestimmung des Gehaltes von Stoffen sind insbesondere die Bestimmung von niedermolekularen, permeablen neben höhermolekularen, impermeablen Stoffen. Ein Anwendungsfall ist beispielsweise die Bestimmung des Gehaltes an (permeablem) Alkohol und an (impermeablem) Zucker während der alkoholischen Gärung. Eine derartige Bestimmung hat Bedeutung sowohl für die Herstellung alkoholischer Getränke als auch für die Herstellung von Industriealkohol. Die bekannten Verfahrensweisen sind auch anwendbar auf die Bestimmung des menschlichen Blutalkoholgehaltes.

Weitere Anwendungsfälle sind die Gehaltsbestimmung von organischen Lösungsmitteln in wäßrigen Lösungen (z.B. von Ethanol, Methanol, Propanol, Estern, Äther, Azeton u.a.), wie sie bei bestimmten chemischen Verfahren anfallen. Ein anderer Anwendungsbereich in der chemischen Industrie ist die Bestimmung von Lösungsmittelresten, Salzen und anderen Schadstoffen in Abwässern.

Die bekannten Verfahrensweisen sind außerdem einzusetzen zur Überwachung von Dialyseprozessen.

Ein besonderer Anwendungsfall für das bekannte Verfahren II liegt in der raschen Erkennung eines Lösungswechsels, wie er beispielsweise in einer Brauerei oder in anderen Bereichen der Nahrungsmittelindustrie bei einem Wechsel zwischen Reinigungsmittel (z.B. Leitungswasser) und einem Produkt (z.B. Bier) auftreten.

Durch die schnelle Ermittlung des Zeitpunktes des Lösungswechsels an einer bestimmten Stelle können Verluste an Produkten eng begrenzt werden. Das Verfahren II kann ferner Anwendung finden in Verbindung mit nur einer einzigen osmotischen Zelle als Warnsystem, um beispielsweise Lecks in Tanks, Rohrleitungen usw. aufgrund von rasch auftretenden Konzentrationsänderungen zu erkennen.

Das bekannte Verfahren bietet somit eine Vielfalt von Anwendungsmöglichkeiten, wobei allerdings von Nachteil ist, daß z.B. hohe Konzentrationen von Stoffen nur mit relativ begrenzter Genauigkeit meßbar sind.

Es ist Aufgabe der Erfindung, das bekannte Verfahren dahingehend zu verbessern, daß mit dem verbesserten Verfahren auch die Gehalte von in hoher Konzentration vorliegenden Stoffen mit sehr großer absoluter Genauigkeit, beispielsweise im Bereich um 0,01 Gew% bestimmt werden können.

Diese Aufgabe wird gemäß der Erfindung durch das Kennzeichen des Anspruchs 1 gelöst.

Beim Verfahren gemäß der Erfindung werden im Unterschied zu der bekannten Verfahrensweise Differenzmessungen des osmotischen Druckes von permeabler und impermeabler Substanz ausgeführt, wobei besonders empfindliche Druckwandler zur Druckmessung eingesetzt werden können. Da die Bezugslösung die Stoffe, deren Gehalt zu bestimmen ist, bereits in einer mit der zu untersuchenden Lösung vergleichbaren Konzentration enthält, heben sich die Konzentrationen der Stoffe auf beiden Seiten der Membran osmotisch in ihrer osmotischen Wirkung gegeneinander auf, und die osmotische Zelle "sieht" gewissermaßen nur darüber hinausgehende Konzentrationsunterschiede der Stoffe. Die absolute Höhe des Arbeitsdruckes $P_O$ ergibt sich unter diesen Bedingungen aus der Konzentration des zusätzlich in der Zelle enthaltenen impermeablen Osmotikums.

Bei Durchführung der Maßnahmen gemäß der Erfindung bei den Verfahrensweisen Ia und Ib ergibt $P_O - P_E$ den Unterschied in der Konzentration (Gehalt) des oder der impermeablen Stoffe und $P_E - P_{min}$ den Unterschied in der Konzentration des permeablen Stoffes. Unter Berücksichtigung der jeweils vorgegebenen Konzentration der Stoffe in der Bezugslösung läßt sich hieraus die Gesamtkonzentration der Stoffe mit hoher Genauigkeit ermitteln.

In einer Variation der bekannten Verfahrensweise I kann aus der Änderung von $\frac{dp}{dt}$ im Minimum $P_O - P_E$ bestimmt werden. Auch bei Durchführung dieser Verfahrensweise wird durch Anwendung der Maßnahmen gemäß der Erfindung die Genauigkeit in der Bestimmung von

$$\left(\frac{d^2 P}{dt^2}\right)$$

erhöht.

Nach der Verfahrensweise IIa werden aus der Anfangsneigung $\left(\frac{dP}{dt}\right)_{t=0}$ die Differenzkonzentrationen ermittelt, wobei $P_E$ separat bestimmt wird. Bei Einsatz von zwei Bezugslösungen mit unterschiedlichem Konzentrationsverhältnis von permeablem zu impermeablem Stoff lassen sich die Konzentrationen aus zwei Messungen der Anfangsneigungen bestimmen, wobei die Reflektionskoeffizienten zuvor zu bestimmen sind.

Eine besonders vorteilhafte Verfahrensvariante gemäß der Erfindung besteht darin, daß zur Bestimmung geringer Abweichungen der Gehalte an Stoffen in einer Lösung von einem vorgegebenen Sollgehalt eine Lösung mit dem Sollgehalt als Bezugslösung eingesetzt wird, und daß eine Lösung mit dem Sollgehalt der Stoffe und zusätzlich dem Überschuß an impermeablem Stoff als Osmometerlösung eingesetzt wird.

Diese Verfahrensvariante bietet, insbesondere auf der Basis der Verfahrensweise IIa, d.h. der Bestimmung der Gehalte mittels der Anfangsneigung, die Möglichkeit, die Konzentration von Lösungen (beispielsweise auch von Abwässern) in Tanks, Rohrleitungen u.dgl. rasch zu erfassen und zu regulieren, wenn dabei die Sollkonzentration als Bezugslösung verwendet wird.

Bei Durchführung des Verfahrens gemäß der Erfindung sind beim Wechsel von der Bezugslösung zu der zu untersuchenden Lösung die transienten Druckänderungen ensprechend gering, so daß ein hoch auflösender Druckwandler verwendet werden kann. Eine genaue Messung erfordert unter diesen Bedingungen jedoch eine hinreichende Temperaturkonstanz während der Messungen. Insbesondere für den Fall, daß die zu bestimmende Abweichung der Gehalte der Stoffe unterhalb 20 mOsm liegen, muß die Temperatur der Lösungen am Meßort konstant gehalten werden.

Außer in den schon genannten Anwendungsfällen kann das Verfahren gemäß der Erfindung generell eingesetzt werden zur Bestimmung der kleinen Konzentration eines Stoffes neben hohen Konzentrationen an Fremdstoffen, wie beispielsweise zur Bestimmung des Blutalkoholgehaltes. Weitere Anwendungen sind die Feinkontrolle von Konzentrationen in verschiedenen Bereichen der chemischen und pharmazeutischen Industrie ebenso wie der Biotechnologie und der Nahrungsmittelindustrie.

Zur Durchführung der verschiedenen Verfahrensweisen gemäß der Erfindung sind Einrichtungen gemäß den Oberbegriffen der Ansprüche 4 und 5 geeignet.

Der Meßkopf gemäß Anspruch 4 wird im Folgenden als "Meßkopf a", der Meßkopf gemäß Anspruch 5 als "Meßkopf b" (Meßkopf mit integriertem Behälter) bezeichnet.

Die Einrichtungen sind erfindungsgemäß durch eine Einrichtung gekennzeichnet, die dazu dient, die temperatur der Lösungen an der Meßstelle konstant zu halten. Im einfachsten Falle kann dies ein Thermostat sein, bei dem die Meßstelle in einem Temperierten Raum untergebracht ist.

Bei einer zweckmäßigen Ausführungsform der Einrichtung gemäß der Erfindung sind an der osmotischen Zelle verschließbare Zu- bzw. Ableitungen für die Osmometerlösung vorgesehen.

Die Einrichtungen können unabhängig von der Art des verwendeten Meßkopfes und der Art der angewendeten Verfahrensweise und somit unabhängig davon, ob ein oder zwei Meßköpfe eingesetzt werden, sowohl als Meßgerät mit veränderbarem Standort als auch als Anlagenteil, beispielsweise als Teil einer Anlage zur Durchführung eines bestimmten Prozesses, wie der alkoholischen Gärung, ausgestattet sein. Dabei kann es zweckmäßig sein, daß ein Steuergerät zur Steuerung einer automatischen Betriebsweise der Einrichtung vorgesehen ist, wobei alternierend in vorbestimmten Zeitabständen die zur Einstellung des Arbeitsdruckes $P_O$ bestimmte Bezugslösung und die zu untersuchende Lösung in den Behälter des Meßkopfes b bzw. in den Behälter, an dem der Meßkopf a angebracht ist, eingefüllt werden.

Sind zwei Meßköpfe zur Durchführung der Verfahrensweise II vorgesehen, so können selbstverständlich auch ein Meßkopf a und ein Meßkopf b zum Einsatz kommen.

Ferner kann eine Einrichtung, bei der eine weitere Steuer- und/oder Überwachungseinrichtung vorgesehen ist, eingesetzt werden, die die elektrischen Ausgangssignale des Meßkopfes (a, b) oder - bei Anwendung der Verfahrensweise II - der Meßköpfe (a, a oder a, b oder b, b) aufnimmt und die zur Steuerung und/oder Überwachung von Vorgängen dient, die in funktioneller Abhängigkeit von Gehalt der zu untersuchenden Stoffe stehen. Neben einer Überwachung der Vorgänge können bestimmte Sollwerte der Konzentration (Gehalte) der Stoffe bei derartigen Prozessen elektronisch reguliert werden. Derartige Prozesse sind beispielsweise der Ablauf der alkoholischen Gärung, bei der der Gehalt an Alkohol (permeabel) und der Gehalt an Zucker (impermeabel) eine Aussage über den Stand der Gärung zulassen oder die Überwachung von Lösungsmittelkonzentrationen in Abwässern. Bei Anwendung der Verfahrensweise gemäß der Erfindung können herkömmliche analytische Konzentrationsbestimmungen entfallen. Die Taktzeit, in der die Messung wiederholt werden kann, hängt im Falle der Anwendung der Verfahren Ia und Ib einerseits von der Untersuchungszeit, die einige Minuten betragen kann, ab, andererseits von den zu überwachenden Vorgängen selbst. Die Untersuchungszeit hängt von den physikalischen Eigenschaften der Membran (Leitfähigkeit für das Lösungsmittel und die gelösten Stoffe) sowie des Meßkopfes (a, b), (Volumen/Oberflächen- Verhältnis der osmotischen Zelle; Volumenelastizitätsmodul) ab und kann somit an das Meßproblem angepaßt werden.

Ausführungsformen des Meßkopfes (a, b) sowie Ausführungsformen der Einrichtung gemäß der Erfindung sind in der Zeichnung schematisch dargestellt und werden im folgenden näher erläutert.

In der Zeichnung sind ferner Eichdiagramme zu Ausführungsbeispielen der Verfahrensweise gemäß der Erfindung wiedergegeben. Es zeigen

| | |
|---|---|
| Figur 1 | einen Meßkopf a, bestehend aus einer osmotischen Zelle mit Druckmeßeinrichtung sowie einer Mikrometerschraube mit Regelstab, |
| Figur 2 | eine Einrichtung mit einem Meßkopf a, bestehend aus einer osmotischen Zelle mit Druckmeßeinrichtung, |
| Figur 3 | einen Meßkopf b, bestehend aus einer osmotischen Zelle und einem an die Zelle angrenzenden Behälter, |
| Figur 4 | Einrichtung mit Meßkopf b gemäß Fig. 3 mit automatischer Steuerung des Meßvorganges sowie einer Prozeßsteuerung, |
| Figur 5 | den Druckverlauf in der osmotischen Zelle während des Meßvorganges, |
| Figuren 6 bis 9 | Eichdiagramme (Verfahren Ia) zu den Ausführungsbeispielen 1 bis 3. |

7

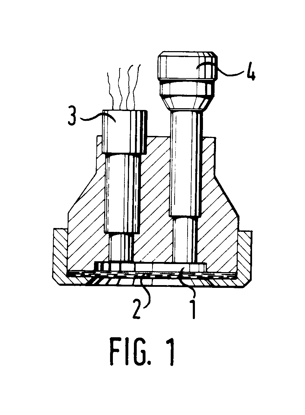

Der in Fig. 1 dargestellte Meßkopf a besteht aus einer osmotischen Zelle 1 mit Membran 2, einer Druckmeßeinrichtung 3 mit einem elektrische Signale abgebenden Druckwandler. Außerdem ist eine Einrichtung 4 zur kontrollierten Volumenänderung der osmotischen Zelle 1 vorgesehen, bestehend aus einer Mikrometerschraube mit Regelstab, mit dem eine meßbare Volumenänderung der osmotischen Zelle vorgenommen werden kann. Diese gezielte Volumenänderung, die eine Druckänderung in der osmotischen Zelle zur Folge hat, kann dazu dienen, die Starrheit der osmotischen Zelle über den Druckmeßwandler zu kontrollieren bzw. den Elastizitätsmodul der Zelle zu ermitteln.

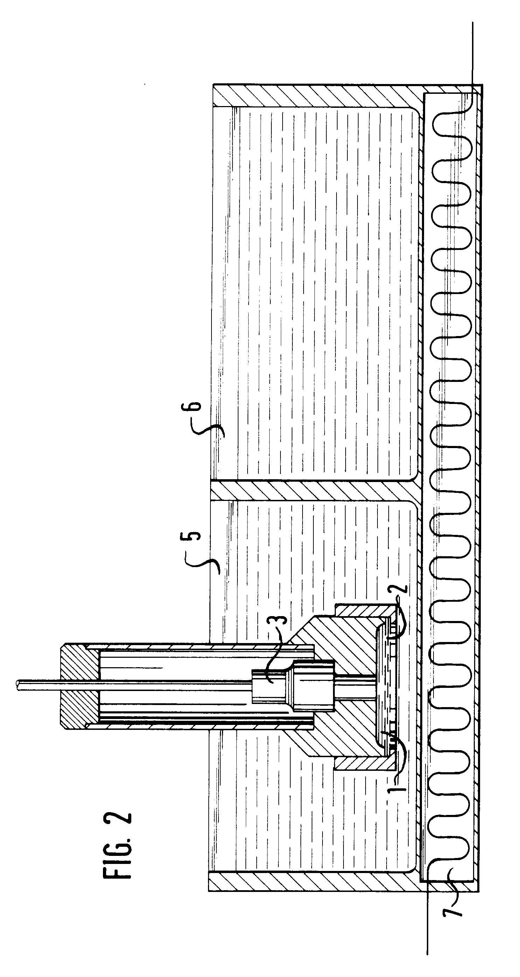

In Fig. 2 ist eine Einrichtung mit einem Meßkopf a der in Fig. 1 dargestellten Art, bestehend aus osmotischer Zelle 1 und Druckmeßeinrichtung 3 im Einsatz dargestellt. Eine Einrichtung zur kontrollierten Volumenänderung ist bei dieser Ausführungsform nicht vorgesehen.

Behälter 5 und 6 sind wahlweise für die Bezugslösung bzw. für die zu untersuchende Lösung vorgesehen. Die in den beiden Behältern befindlichen Lösungen werden über einen Thermostat 7 auf konstanter Temperatur gehalten.

Zur Bestimmung des Gehaltes an gelöstem Stoff der im Behälter 6 befindlichen Lösung wird der Meßkopf zunächst zur Einstellung des Arbeitsdruckes $P_O$ in die im Behälter 5 befindliche Bezugslösung getaucht. Nach Einstellen und Ermitteln des Arbeitsdruckes $P_O$ wird der Meßkopf in die zu untersuchende Lösung im Behälter 6 getaucht, worauf sich zunächst der Minimaldruck $P_{min}$ und darauf der Enddruck $P_E$ einstellen.

Zur Eichung wird anstelle der zu untersuchenden Lösung eine Eichlösung im Behälter 6 eingesetzt.

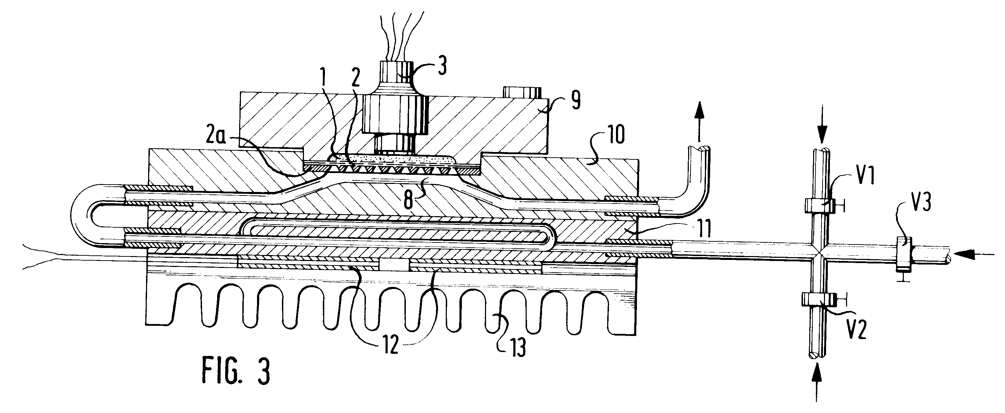

In Fig. 3 ist ein Meßkopf b mit osmotischer Zelle 1, Membran 2 mit Stützgitter 2a und Druckmeßeinrichtung 3 dargestellt, in den ein Behälter 8 zur Aufnahme der Lösungen integriert ist und dessen Gehäuse, bestehend aus den Elementen 9 und 10, aus Stahl gefertigt ist. Am Element 10 ist eine Einrichtung zur Temperaturkonstanthaltung angebracht, bestehend aus der Wärmetauscherplatte 11 aus Kupfer, in der die Zuleitung zum Behälter 8 schleifenförmig verläuft, einer Peltier-Zelle aus zwei Peltier-Elementen 12 und daran angeschlossener Temperaturableitung 13.

Zur Einstellung des Arbeitsdruckes wird zunächst eine geeignete Bezugslösung bei geöffnetem Ventil V1 (die Ventile V2 und V3 sind geschlossen) durch den Behälter 8 eingeleitet, wodurch diese Lösung über die Membran 2 mit der in der osmotischen Zelle befindlichen Osmometerlösung, in Verbindung gebracht wird. Nach Einstellen und Ermitteln des Arbeitsdruckes $P_O$ wird im Anschluß daran bei geöffnetem Ventil V2 (die Ventile V1 und V3 sind geschlossen) die zu untersuchende Lösung in den Behälter 8 geleitet, worauf sich Minimaldruck $P_{min}$ und Enddruck $P_E$ einstellen. Zur Eichung wird über das Ventil V3 bei geschlossenen Ventilen V1 und V2 Eichlösung über den Behälter 8 geleitet.

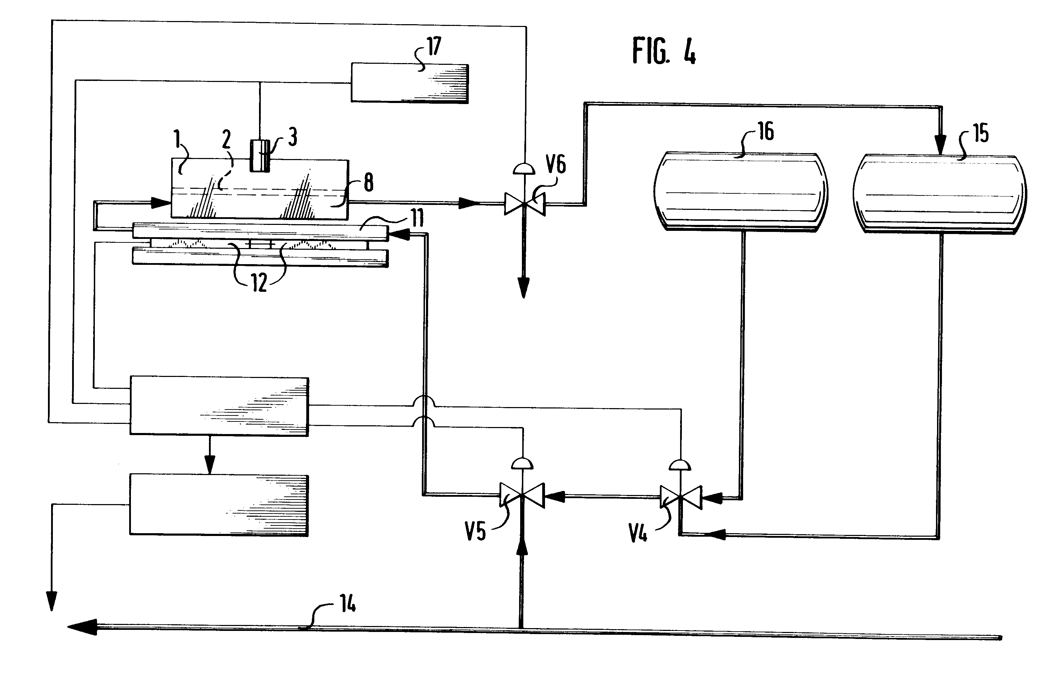

Fig. 4 zeigt eine Einrichtung mit einem Meßkopf b der in Fig. 3 dargestellten Art, der zur Bestimmung des Gehaltes von Stoffen in einer in der Leitung 14 fließenden Lösung vorgesehen ist. Die Ventile V4 und V5, die in ihrer Funktion den in Fig. 3 dargestellten Ventilen V1, V2 und V3 entsprechen, sind als fernsteuerbare ABsperrorgane ausgebildet, die mit dem Steuergerät I in elektrischer Verbindung stehen. Mittels dieses Steuergerätes I wird in vorbestimmten Zeitabständen zur Einstellung eines Arbeitsdruckes $P_O$ Bezugslösung aus dem Speicherbehälter 15 über die Ventile V4 und V5 durch den Behälter 8 geleitet (Ventil V6 geöffnet) und danach die zu untersuchende Lösung aus der Leitung 14 über das Ventil V5 (bei geschlossenem Ventil V4) dem Behälter 8 zugeführt. Darüberhinaus kann in selbstverständlich größeren Zeitabständen mittels des Steuergerätes I das Einspeisen von Eichlösungen aus dem Speicherbehälter 16 über die Ventile V4 und V5 in den Behälter 8 veranlaßt werden.

Wie aus Fig. 4 ferner hervorgeht, werden die elektrischen Ausgangssignale der Druckmeßeinrichtung 3 auf einem Anzeigegerät 17 angezeigt und vom Steuergerät I übernommen. Von einem Steuergerät II, das mit dem Steuergerät I in elektrischer Verbindung steht, wird in Abhängigkeit von den ermittelten Meßwerten der Prozes gesteuert.

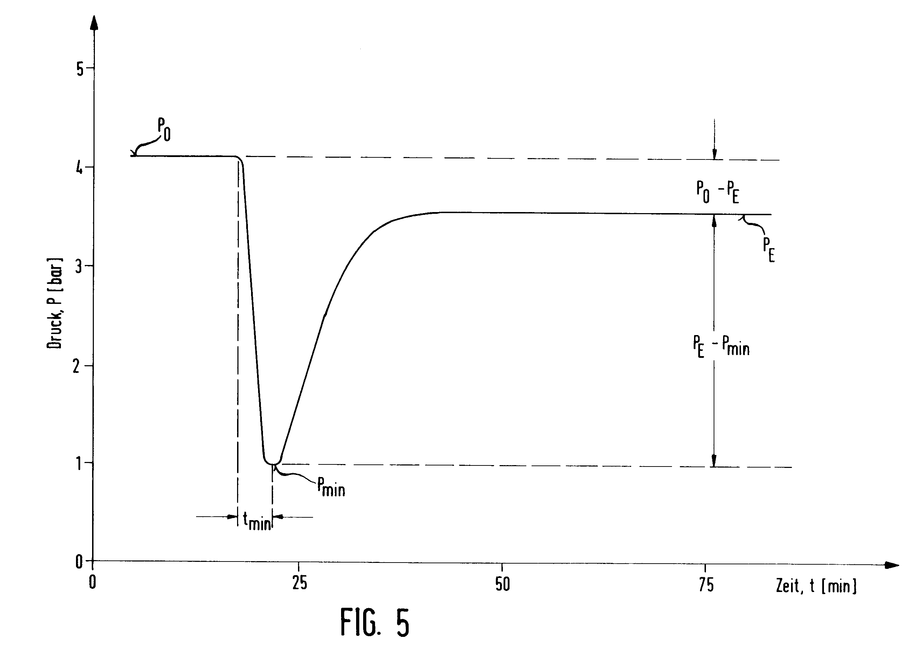

Fig. 5 zeigt den typischen Druckverlauf in der osmotischen Zelle nach dem Wechsel von Bezugslösung auf die zu untersuchende Lösung oder Eichlösung.

Ausführungsbeispiele

Unter Verwendung eines Meßkopfes der in Fig. 3 dargestellten Art wurden nachfolgend angegebene Lösungen untersucht. Der Meßkopf bestand aus einem Gehäuse aus Edelstahl. Das Verhältnis des Volumens der osmotischen Zelle zur effektiven Oberfläche der Membran betrug 0,1 mm. Die Membran war eine asymmetrische Polyamidmembran (Umkehrosmosemembran) mit einer Trenngrenze von 50 Dalton. Diese Osmometermembran ist für Kaliumhexacyanoferrat (II) ($K_4[Fe(CN)_6]$) völlig impermeabel. Die Lösungen wurden zur Messung auf 25°C gehalten.

Es wurde nach der Verfahrensweise Ia vorgegangen, nach der sich die Konzentrationswerte der gesuchten Stoffe nach Maßgabe von Eichwerten ergeben.

1. Bestimmung einer kleinen Konzentration eines permeablen Stoffes (Ethanol) neben einer hohen Konzentration eines praktisch impermeablen Stoffes (NaCl).

Ausführungsbeispiel 1a

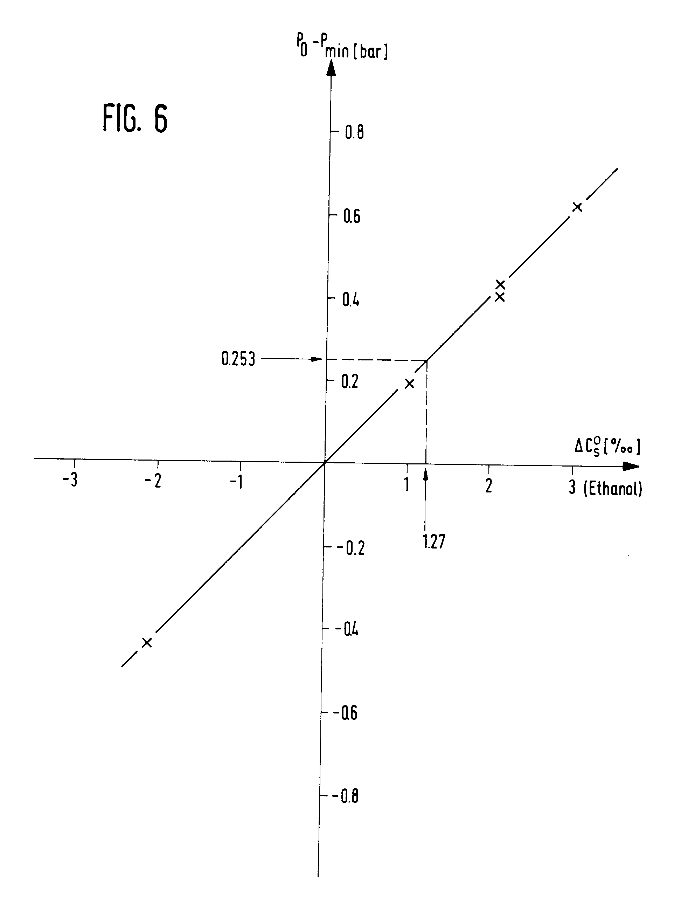

Zur Aufstellung einer Eichkurve (Fig. 6) wurden die nachfolgend angegebenen fünf Eichwerte ermittelt. Dabei wurde für den ersten Eichwert von einer Bezugslösung ohne Alkoholanteil (nur 300 mOsmol NaCl) ausgegangen.

Die Osmometerlösung enthielt 300 mOsmol NaCl + 63 mOsmol Kaliumhexacyanoferrat (II) (K$_4$[Fe(CN)$_6$]),der Arbeitsdruck betrug P$_O$ = 0,96 bar.

Die Ethanolkonzentration der Eichlösungen, die alle 300 mOsmol enthielten, war so gewählt, daß deren Differenz zu der Ethanolkonzentration der jeweiligen Bezugslösung den nachfolgend angegebenen $\Delta C_s^O$-Werten entsprach.

Der Wechsel der Bezugslösungen gegen die entsprechenden Eichlösungen lieferte folgende Ergebnisse:

| Änderung der Alkohol-konzentration, $C_s^o$ | | Maximale Änderung im Osmometerdruck, (P$_0$ - P$_{min}$) |
|---|---|---|
| (mM) | (%$_o$) | (bar) |
| 22 | 1,01 | 0,192 |
| 46 | 2,11; 2,11 | 0,436; 0,404 |
| 66 | 3,03 | 0,620 |
| -46 | -2,11 | -0,440 |

Der negative Wert von 1C $\Delta$ bzw. (P$_0$ - P$_{min}$) bedeutet, daß das Osmometer zunächst gegen eine Eich-Ethanollösung von 46 mM Ethanol äquilibriert wurde, die anschließend gegen die Bezugslösung als Eichlösung (300 m0smol NaCl) ausgetauscht wurde.

Die Meßdaten ergeben die in Fig. 6 wiedergegebene Eichkurve.

Bei gleicher Osmometerlösung wurde anschließend nach Maßgabe der ermittelten Eichkurve die Ethanoikonzentration einer ebenfalls 300 m0smol enthaltenden Lösung ermittelt, deren Einwaage an Ethanol 1,26 ‰ betrug. Die gemessene maximale Druckänderung von 0,253 bar ergab eine gemessene Ethanolkonzentration von 1.27 ‰.

Ausführungsbeispiel 1b

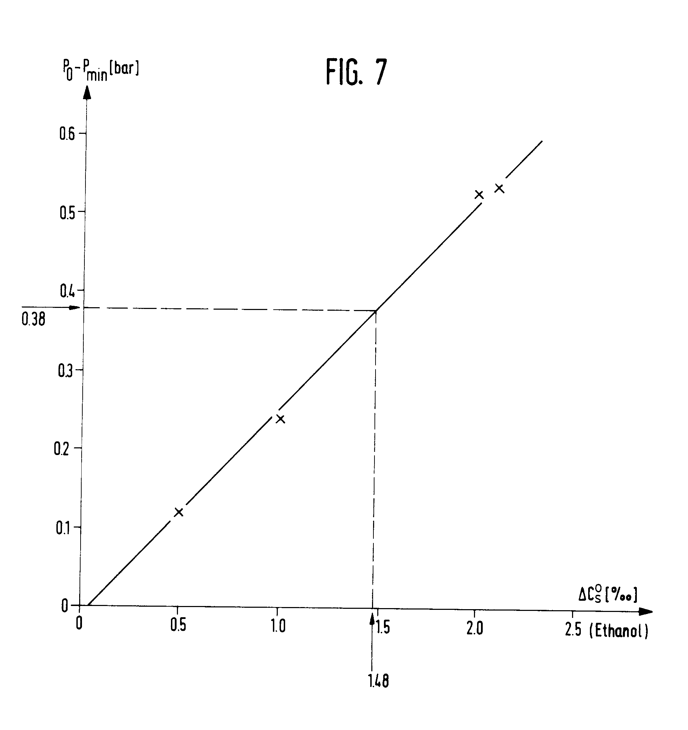

Zur Aufstellung einer Eichkurve (Fig. 7) wurden vier Eichwerte ermittelt.
Osmometerlösung:      300 mOsmol NaCl + 61 mOsmol K$_4$[Fe(CN)$_6$]
Arbeitsdruck :        p$_0$ = 0,66 bar
Bezugslösung :        Blutplasma mit einem osmotischen Druck von 320.9 mOsmol.
Die Eichung mit Blutplasma mit verschiedenen Alkoholkonzentrationen ergab :

| Alkoholkonzentrationen im Blutplasma (‰) | Maximale Druckänderung (bar) |
|---|---|
| 0,5 | 0,118 |
| 1,0 | 0,240 |
| 2,0 | 0,528 |
| 2,1 | 0,536 |

Aus der Eichkurve (Fig. 7) erhält man für ein Plasma mit einer Einwaage von 1.45 ‰ Ethanol für eine maximale Druckänderung von 0,380 bar einen gemessenen Alkoholgehalt von 1,48 ‰.

2. Bestimmung von kleinen Konzentrationsänderungen (-schwankungen) eines impermeablen Stoffes neben hohen Konzentrationen eines praktisch impermeablen Stoffes (NaCl).

Ausführungsbeispiel 2

Bezugslösung:           300 mOsmol NaCl
Osmometerlösung:        300 mOsmol NaCl + 60 mOsmol (K$_4$[Fe(CN)$_6$]
Arbeitsdruck:           0,95 bar

Der Wechsel der Bezugslösung gegen Eichlösungen (300 m0smol NaCl + (K$_4$[Fe(CN)$_6$] mit unterschiedlichen Gehalten der impermeablen Substanz (K$_4$[Fe(CN)$_6$] liefert die Eichwerte:

| Änderung der Konzentration an K$_4$[Fe(CN)$_6$] in der Eichlösung (mOsmol) | Stationäre Druckänderung im Osmometer, (P$_0$ - P$_E$) (bar) |
|---|---|
| 7 | 0,124 |
| 9,4 | 0,176 |
| 15,2 | 0,258 |
| - 7 | -0,112 |
| - 9,4 | -0,168 |
| -15,2 | -0,257 |

Negative Werte bezeichnen Änderungen bei einem Wechsel von Eichlösungen auf die Bezugslösung (300 mOsmol NaCl).

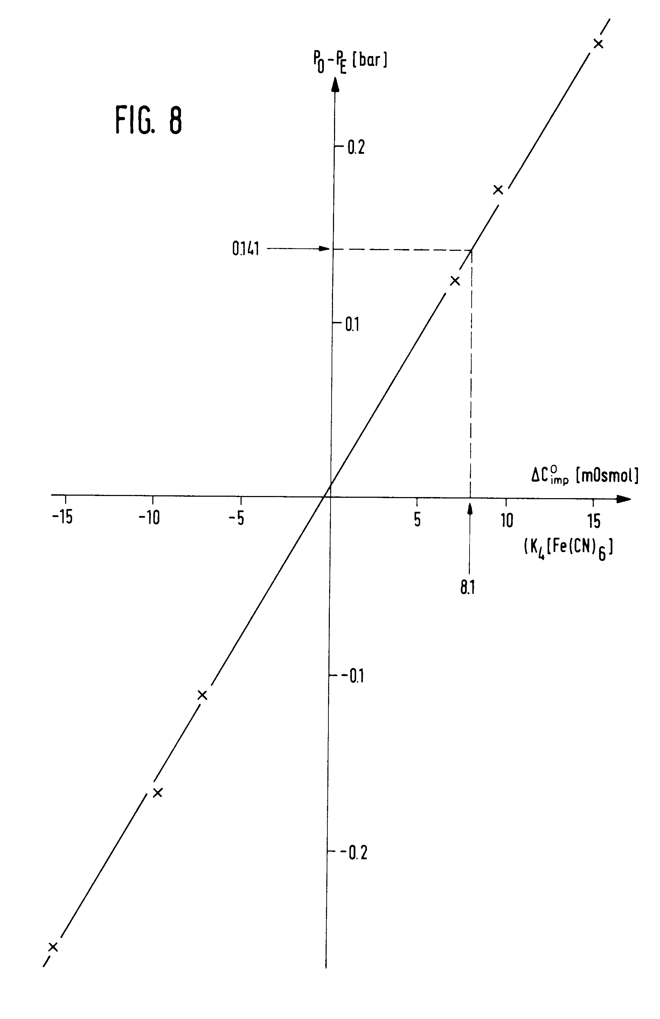

Die Eichkurve aus diesen Daten (Fig. 8) liefert für eine stationäre Druckänderung von 0,141 bar einer Losung, die neben 300 mOsmol NaCl eine Einwaage von 8,0 mOsmol NaCl enthielt, hierfür eine gemessene Konzentration von 8,1 mOsmol.

3. Feinbestimmung des Gehaltes an permeablen Stoffen in einer Lösung.

Ausführungsbeispiel 3

Die Bestimmung erfolgt durch Vergleich mit einer Bezugslösung genau bekannten Gehaltes, deren Konzentration nur wenig von der zu bestimmenden Lösung abweicht.

Bezugslösung:           38 Gew% Ethanol in Wasser
Osmometerlösung:        38 Gew% Ethanol + 63 mOsmol K$_4$[Fe(CN)$_6$]

Dies ergibt einen Arbeitsdruck von P$_0$ = 0,95 bar.

Die Zugabe von Ethanol zur Bezugslösung liefert Eichlösungen, die folgende maximale Druckänderungen im Osmometer ergeben:

| Alkoholkonzentration der Eichlösungen (Gew%) | Maximale Druckänderungen im Osmometer (bar) |
|---|---|
| 38,197 | 0,056 |
| 38,588 | 0,132 |
| 38,977 | 0,207 |

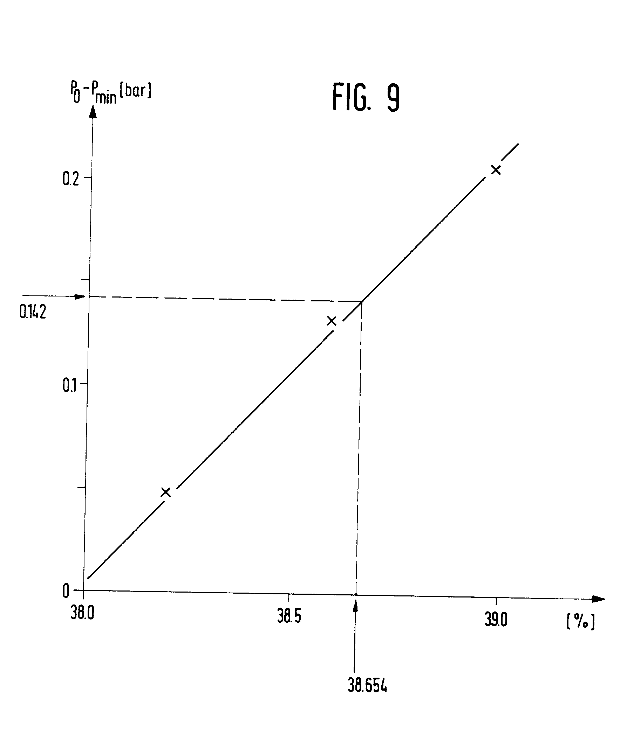

Die Eichkurve (Fig. 9) ergibt für eine wäßrige Ethanollösung (Einwaage 38.655 %) mit einem P$_0$ - P$_{min}$ = 0,142 bar eine gemessene Konzentration von 38,654 % Ethanol.

**Patentansprüche**

**1.** Verfahren zur Bestimmung des Gehaltes von mindestens zwei in einem Lösungsmittel gelösten Stoffen mittels einer eine starre Wandung aufweisenden osmotischen Zelle mit Druckmeßeinrichtung zur Messung des hydrostatischen Druckes in der osmotischen Zelle und mit einer Membran, durch die der Austausch der zu untersuchenden Stoffe verschieden schnell erfolgt, über die die in der osmotischen Zelle befindliche Osmometerlösung mit der auf den Gehalt der Stoffe zu untersuchenden Lösung in Verbindung gebracht wird, wobei zunächst unter Verwendung einer mit der Osmometerlösung über die Membran in Verbindung gebrachten Lösung sowie einer Osmometerlösung ein Arbeitsdruck $P_O$ eingestellt und ermittelt wird, worauf nach Austausch der Lösung durch die zu untersuchende Lösung aus dem sich in der osmotischen Zelle einstellenden Druckverlauf der Gehalt des oder der impermeablen Stoffe und des permeablen Stoffes in der zu untersuchenden Lösung bestimmt wird,

**dadurch gekennzeichnet,**

daß zur Feinbestimmung des Gehaltes der Stoffe die Lösung als Bezugslösung und die Osmometerlösung so gewählt werden, daß zur Einstellung des Arbeitsdruckes $P_O$ ein Überschuß an impermeablem Stoff in der Osmometerlösung gegenüber der Bezugslösung von nicht mehr als 80 mOsmol enthalten ist, daß die Osmometerlösung die zu bestimmenden Stoffe enthält, wobei die Differenz der Gehalte der zu untersuchenden Lösung und der Stoffe in der Osmometerlösung nicht mehr als jeweils 70 mOsmol beträgt und daß der Gesamtgehalt der Stoffe in der zu untersuchenden Lösung unter Berücksichtigung des Gehaltes der Stoffe in der Osmometerlösung bestimmt wird.

2. Verfahren nach Anspruch 1,

**dadurch gekennzeichnet,**

daß zur Bestimmung geringer Abweichungen der Gehalte an Stoffen in einer Lösung von einem vorgegebenen Sollgehalt eine Lösung mit dem Sollgehalt als Bezugslösung eingesetzt wird, und daß eine Lösung mit dem Sollgehalt der Stoffe und zusätzlich dem Überschuß an impermeablem Stoff als Osmometerlösung eingesetzt wird.

3. Verfahren nach Anspruch 1 oder 2,

**dadurch gekennzeichnet,**

daß für den Fall, daß die zu bestimmende Abweichung der Gehalte der Stoffe unterhalb 20 mOsmol liegen, die Temperatur der Lösungen am Meßort konstant gehalten wird.

4. Einrichtung zur Bestimmung des Gehaltes von mindestens zwei in einem Lösungsmittel gelösten Stoffen zur Durchführung des Verfahrens nach Anspruch 3, bei der mindestens ein Behälter (5,6) und mindestens ein Meßkopf vorhanden ist, der aus einer osmotischen Zelle (1) mit Druckmeßeinrichtung (3) besteht, die eine starre Wandung aus Metall oder Kunststoff besitzt und deren Membran (2) einen hohen Elastizitätsmodul besitzt, wobei das Verhältnis des Volumens der osmotischen Zelle zur effektiven Oberfläche der Membran höchstens 0,2 mm beträgt und bei der der oder die Meßköpfe in Behälter eintauchbar sind und wobei der oder die Behälter wahlweise mit einer Bezugslösung zur Einstellung des Arbeitsdruckes $P_O$, mit der zu untersuchenden Lösung und ggf. mit Eichlösungen beschickbar sind, **dadurch gekennzeichnet,**

daß eine Einrichtung (7) vorgesehen ist, die dazu dient, die Temperatur der Lösungen an der Meßstelle konstant zu halten.

5. Einrichtung zur Bestimmung des Gehaltes von mindestens zwei in einem Lösungsmittel gelösten Stoffen zur Durchführung des Verfahrens nach Anspruch 3, bei der mindestens ein Meßkopf vorhanden ist, der aus einer osmotischen Zelle (1) mit Druckmeßeinrichtung (3) und einem Behälter (8) besteht, wobei die osmotische Zelle (1) eine starre Wandung aus Metall oder Kunststoff besitzt, wobei das Verhältnis des Volumens der osmotischen Zelle (1) zur effektiven Oberfläche der Membran (2) höchstens 0,2 mm beträgt und wobei der Behälter (8) über die starre Membran (2) mit der osmotischen Zelle (1) in Verbindung steht und mit Zu- und Ableitung für die Bezugslösung zur Einstellung des Arbeitsdruckes $P_O$, für die zu untersuchende Lösung sowie gegebenenfalls für eine Eichlösung versehen ist und die Zu- und Ableitung des Behälters (8) sowie der Behälterinnenraum so ausgebildet sind, daß die in ihn eingespeisten Lösungen schnell in den Behälter einfüllbar sind, wobei mit der Zuleitung für den Behälter des oder der Meßköpfe Speicherbehälter (15) für die Bezugslösung zur Einstellung des Arbeitsdruckes $P_O$ in Verbindung stehen und ferner ein mit der Zuleitung für den Behälter des oder der Meßköpfe in Verbindung stehender, die zu untersuchende Lösung enthaltender Aufnahmebehälter oder eine Rohrleitung vorgesehen sind,

**dadurch gekennzeichnet,**

daß eine Einrichtung vorgesehen ist, die dazu dient, die Temperatur der Lösungen an der Meßstelle konstant zu halten.

**Claims**

1. Method for determining the content of at least two substances dissolved in a solvent, using a rigid-walled osmotic cell with a pressure measuring device for measuring the hydrostatic pressure in the osmotic cell and with a diaphragm through which the exchange of the substances under investigation takes place at different rates and via which the osmometer solution in the osmotic cell is brought into contact with the solution of which the content of the substances is to be investigated, maid method comprising first using a solution contacted with the osmometer solution via the diaphragm as well as the osmometer solution to set and determine a working pressure $P_0$, whereupon after exchanging the solution for the solution under investigation the content of the impermeable substance or substances and of the permeable substance in the solution under investigation is determined from the pressure profile now produced in the osmotic cell,

   characterised in that in order to accurately determine the content of the substances the solution as reference solution and the osmometer solution are chosen such that to set the working pressure $P_0$ an excess amount of impermeable substance of not more than 80 mOsmol is contained in the osmometer solution with respect to the reference solution, that the osmometer solution contains the substances to be determined, the difference in the contents of the solution under investigation and of the substances in the osmometer solution being not more than 70 mOsmol in each case, and that the overall content of the substances in the solution under investigation is determined taking into account the content of the substances in the osmometer solution.

2. Method according to claim 1,

   characterised in that to determine small deviations in the contents of the substances in a solution from a preset nominal content, a solution having the nominal content is used as reference solution, and that a solution having the nominal content of the substances and in addition the excess of impermeable substance is employed as osmometer solution.

3. Method according to claim 1 or 2,

   characterised in that in the event that the deviation to be determined in the contents of the substances is less than 20 mOsmol, the temperature of the solutions is kept constant at the measurement site.

4. Apparatus for determining the content of at least two substances dissolved in a solvent, for carrying out the method according to claim 3, incorporating at least one container (5, 6) and at least one measuring head consisting of an osmotic cell (1) with a pressure measuring device (3) having a rigid metal or plastic wall and the diaphragm (2) of which possesses a high modulus of elasticity, the ratio of the volume of the osmotic cell to the effective surface area of the diaphragm being not more than 0.2 mm and the measuring head or heads being immersible in containers, and the container or containers being adapted to be filled, as required, with a reference solution to set the working pressure $P_0$, with the solution under investigation, and if appropriate with calibrating solutions,

   characterised by the provision of a device (7) used to keep the temperature of the solutions constant at the measurement site.

5. Apparatus for determining the content of at least two substances dissolved in a solvent, for carrying out the method according to claim 3, incorporating at least one measuring head consisting of an osmotic cell (1) with a pressure measuring device (3) and a container (8), the osmotic cell (1) having a rigid metal or plastic wall, the ratio of the volume of the osmotic cell (1) to the effective surface area of the diaphragm (2) being not more than 0.2 mm, and the container (a) communicating with the osmotic cell (1) via the rigid diaphragm (2) and being equipped with inflow and outflow for the reference solution for setting the working pressure $P_0$, for the solution under investigation and, if appropriate, for a calibrating solution, and the inflow and outflow of the container (8) and the interior of the container being so constructed that the solutions fed into it can be quickly filled into the container, and storage containers (15) for the reference solution in order to set the working pressure $P_0$ communicating with the inflow for the container of the measuring head or heads, and there additionally being provided a receiving container containing the solution under investigation and communicating with the inflow for the container of the measuring head or heads, or else a pipe,

   characterised by the provision of a device used to keep the temperature of the solutions constant at the measurement site.

EP 0 280 109 B1

**Revendications**

**1.** Procédé pour la détermination de la concentration d'au moins deux substances dissoutes dans un solvant, au moyen d'une cellule osmotique comportant une paroi rigide, avec un dispositif de mesure de pression pour mesurer la pression hydrostatique dans la cellule osmotique, et avec une membrane à travers laquelle l'échange des substances à analyser s'effectue à une vitesse variable, par l'intermédiaire de laquelle la solution osmométrique située dans la cellule osmotique est mise en contact avec la solution dont on veut analyser la concentration des substances, procédé dans lequel, en utilisant d'abord une solution amenée en contact avec la solution osmométrique au moyen de la membrane, ainsi qu'une solution osmométrique, on règle et on détermine une pression de marche $P_0$, ensuite, après le remplacement de la solution par la solution à analyser, on détermine la concentration de la substance ou des substances imperméable(s) et de la substance perméable dans la solution à analyser, à partir de l'évolution de marche s'établissant dans la cellule osmotique,
caractérisé en ce que, pour la détermination précise de la concentration des substances, la solution servant de solution de référence et la solution osmométrique sont choisies d'une manière telle que, pour établir la pression de marche $P_0$, la solution osmométrique contient un excès de substance imperméable qui, par rapport à la solution de référence, n'est pas plus grand que 50 mOsmol, que la solution osmométrique contient les substances à déterminer, la différence des concentrations de la solution a analyser et des substances de la solution osmométrique n'étant pas plus grande que 70 mOsmol à chaque fois, et qu'on détermine la concentration totale des substances de la solution à analyser en tenant compte de la concentration des substances de la solution osmométrique.

**2.** Procédé selon la revendication 1, caractérisé en ce que, pour déterminer des faibles écarts des concentrations de substances d'une solution par rapport à une concentration de consigne prédéfinie, on utilise, comme solution de référence, une solution ayant la concentration de consigne et on utilise, comme solution osmométrique, une solution contenant les substances à la concentration de consigne et, en outre, l'excès de substance imperméable.

**3.** Procédé selon la revendication 1 ou 2, caractérisé en ce que la température des solutions est maintenue constante au point de mesure pour le cas ou l'écart des concentrations des sustances à déterminer est inférieur à 20 mOsmol.

**4.** Dispositif pour la détermination de la concentration d'au moins deux substances dissoutes dans un solvant, pour la mise en oeuvre du procédé selon la revendication 3, comportant au moins un réservoir (5, 6) et au moins une tête de mesure formée d'une cellule osmotique (1) avec un dispositif de mesure de pression (3), qui possède une paroi rigide en métal ou en matière plastique et dont la membrane (2) a un module d'élasticité élevé, dispositif dans lequel le rapport volume de la cellule osmotique/surface efficace de la membrane est au plus de 0,2 mm et dans lequel la ou les tête (s) de mesure peut/peuvent être immergée(s) dans les réservoirs, et dans lequel le ou les réservoir(s) sont remplis alternativement avec une solution de référence pour régler la pression de marche $P_0$, avec la solution à analyser ou avec des solutions d'étalonnage, caractérisé en ce qu'il est prévu un dispositif (7) qui sert à maintenir la température des solutions constante au point de mesure.

**5.** Dispositif pour la détermination de la concentration d'au moins deux substances dissoutes dans un solvant, pour la mise en oeuvre du procédé selon la revendication 3, comportant au moins une tête de mesure formée d'une cellule osmotique (1) avec un dispositif de mesure de pression (3) et d'un réservoir (8), dispositif dans lequel la cellule osmotique (1) possède une paroi rigide en métal ou en matière plastique, le rapport volume de la cellule osmotique (1) / surface efficace de la membrane (2) étant au plus de 0,2 mm et le réservoir (8) étant relié à la cellule osmotique (1) par l'intermédiaire de la membrane rigide (2) et pourvu de conduites d'amenée et d'évacuation pour la solution de référence pour régler la pression de marche $P_0$, pour la solution à analyser ainsi qu'éventuellement pour une solution d'étalonnage, et les conduites d'amenée et d'évacuation du réservoir (8) ainsi que l'espace intérieur du réservoir sont réalisés d'une manière telle que les solutions amenées dans celui-ci peuvent remplir le réservoir rapidement, la conduite d'amenée du réservoir de la tête de mesure ou des têtes de mesure étant reliée à des réservoirs (15) de solution de référence pour régler la pression de marche $P_0$, et il est prévu en outre un réservoir de réception ou une tuyauterie contenant la solution à analyser et relié à la conduite d'amenée du réservoir de la tête de mesure ou des têtes de mesure, caractérisé en ce qu'il est prévu un dispositif qui sert à maintenir la température des solutions constante au point de mesure.

FIG. 1

FIG. 2

EP 0 280 109 B1

FIG. 3

FIG. 4

FIG. 5

EP 0 280 109 B1

FIG. 6

FIG. 7

FIG. 8

FIG. 9